# EUROPÄISCHE PATENTSCHRIFT

(11) **EP 1 317 328 B1**
(45) Veröffentlichungstag und Bekanntmachung des Hinweises auf die Patenterteilung: **20.04.2005**
(21) Anmeldenummer: 01967029.8
(22) Anmeldetag: 25.08.2001
(51) Int. Cl.: B21K 25/00, B23P 11/00

(54) **VERSTEMMSTEMPEL UND VERWENDUNG DESSELBEN**
CAULKING PUNCH AND USE THEREOF
POINçON DE MATAGE ET UTILISATION D'UN TEL POINçON

(30) Priorität: 12.09.2000 DE 10044897
(43) Veröffentlichungstag der Anmeldung: 11.06.2003
(73) Patentinhaber: ROBERT BOSCH GMBH, 70442 Stuttgart (DE)
(72) Erfinder: RISPLER, Forian, A-69920 Hirschegg (AT)
(86) Internationale Anmeldenummer: PCT/DE2001/003261
(87) Internationale Veröffentlichungsnummer: WO 2002/022290

(56) Entgegenhaltungen:
- EP-A- 0 329 044
- DE-A- 2 510 171
- DE-A- 3 145 469
- DE-A- 19 741 562
- DE-C- 631 051
- US-A- 3 213 914
- US-A- 4 747 203

## Beschreibung

### Stand der Technik

Die Erfindung geht aus von einem Verstemmstempel zum Verstemmen eines Bauteils in einer Aufnahmebohrung, insbesondere zum Verstemmen eines Befestigungsflansches in einer gestuften Aufnahmebohrung eines Ventilblocks einer schlupfgeregelten Fahrzeugbremsanlage, gemäß dem Oberbegriff des Anspruchs 1 und sowie von einer Verstemmung gemäß Anspruch 6.

Aus der DE 43 32 538 A1 ist ein Hydraulikaggregat für eine schlupfgeregelte Kraftfahrzeugbremsanlage bekannt, mit einem Ventilblock mit einer gestuften Aufnahmebohrung für den hydraulischen Teil eines elektromagnetisch betätigten Ventils. Der hydraulische Teil umfaßt eine Buchse mit einem Befestigungsflansch, der mittels einer Verstemmung gegen eine Stufe der Aufnahmebohrung axial gekontert ist. Um die Verstemmung herzustellen, wird ein hülsenförmiger Zentrierstempel über die zu verstemmende Buchse geschoben. Am radial äußeren Umfang des Zentrierstempels ist ein ebenfalls hülsenförmiger Verstemmstempel axial beweglich geführt, welcher einen größeren Durchmesser aufweist als die Aufnahmebohrung. Durch Aufbringen einer axial wirkenden Verstemmkraft auf den Verstemmstempel wird ein Verstemmvolumen am oberen Rand der Aufnahmebohrung als Verstemmwulst über den Befestigungsflansch der Buchse gedrängt. Die hierdurch entstandene plastische Materialverformung im Bereich des Verstemmwulstes sichert die Lage der Buchse im Ventilblock und leitet die auf den Befestigungsflansch der Buchse übertragenen Kräfte in den Ventilblock ab, weshalb in einem solchen Fall auch von einer "Halteverstemmung" gesprochen wird. Darüber hinaus sind auch sog. "Dichtverstemmungen" bekannt, welche beispielsweise den mit Druckmittel beaufschlagten hydraulischen Teil des elektromagnetisch betätigten Ventils fluid- und druckdicht gegenüber der Umgebung abdichtet.

Jedoch führen Fügespiele und Bauteiltoleranzen oft zu einer exzentrischen Lage des Zentrierstempels gegenüber der Achse der Aufnahmebohrung, so daß der Verstemmwulst in Umfangsrichtung gesehen unterschiedlich stark ausgeprägt wird, wobei bei entsprechend großer Exzentrizität Umfangsabschnitte mit äußerst dünnen Verstemmwülsten entstehen können. Dies führt bei Halteverstemmungen zu einer Verringerung der Dauerfestigkeit und bei Dichtverstemmungen zu einer Beeinträchtigung der Dichtfunktion.

Darüber hinaus werden bei bekannten Dichtverstemmungen häufig zusätzliche Dichtelemente wie beispielsweise O-Ringe verwendet, um eine ausreichende Dichtwirkung zu gewährleisten, weil der Verstemmwulst bei höheren Verstemmkräften die Tendenz hat, nach radial innen abzufließen und sich infolgedessen keine ausreichend hohen Druckspannungen zwischen dem Verstemmvolumen und dem zu verstemmenden Bauteil aufbauen können. Bei der Montage oder beim Verstemmvorgang besteht jedoch die Gefahr, daß diese Dichtelemente jedoch beschädigt werden.

### Vorteile der Erfindung

Der erfindungsgemäße Verstemmstempel hat demgegenüber den Vorteil, daß durch die Randausnehmung in der Stimfläche eine insbesondere radiale Begrenzung für das vom oberen Rand der Aufnahmebohrung gedrängte Verstemmvolumen gebildet wird. Dieses kann dann dem Axialdruck nicht durch Abfließen nach radial innen ausweichen. Infolgedessen können sich zwischen dem zu verstemmenden Bauteil und dem Verstemmwulst hohe radiale Druckspannungen aufbauen. Die mit dem erfindungsgemäßen Verstemmstempel hergestellte Verstemmung zeichnet sich deshalb durch eine hohe Dichtheit und Dauerfestigkeit aus. Auf zusätzliche Dichtelemente kann daher verzichtet werden.

Gemäß einer besonders zu bevorzugenden Maßnahme erweitert sich der Querschnitt der Randausnehmung in axialer, vom Bauteil weg weisender Richtung allmählich, vorzugsweise in stufenförmig konischer Weise. Die Kontur der Randausnehmung wird vorzugsweise durch drei ebene Flächen gebildet wird, welche sich ausgehend vom Durchmesser D₀ in größer werdender Abschrägung in Bezug auf eine Achse der Aufnahmebohrung aneinander anschließen. Wegen des sich erweitemden Querschnitts bewirkt die Randausnehmung eine Selbstzentrierung des Verstemmstempels, wenn dieser unter axialem Druck gegen den Rand der Aufnahmebohrung geführt wird. Dann ist der Verstemmwulst in Umfangsrichtung gleichmäßig stark ausgebildet, was sich vorteilhaft für die Dichtheit und Festigkeit der Stemmverbindung auswirkt. Zudem kann wegen der selbstzentrierenden Eigenschaften des Verstemmstempels auf den Zentrierstempel verzichtet werden.

Die Reststimfläche ist als ebene, senkrecht zur Achse der Aufnahmebohrung verlaufende, ringförmige Fläche ausgebildet, welche nach radial außen durch den radial inneren Rand der Randausnehmung am Durchmesser D₀ und nach radial innen durch den Innendurchmesser Dᵢ des Verstemmstempels begrenzt wird. Zweckmäßig sollte zwischen dem Innendurchmesser Dᵢ des Verstemmstempels und dem radial inneren Rand der Randausnehmung genug Wandstärke vorhanden sein, um die vom nach radial innen drängenden Verstemmwulst herrührenden Druckkräfte aufnehmen zu können.

Zweckmäßig ist der Verstemmstempel an die Geometrie der Aufnahmebohrung derart angepaßt, daß der die Reststirnfläche begrenzende Durchmesser D₀ am radial inneren Rand der Randausnehmung kleiner ist als der Durchmesser d der Aufnahmebohrung und der radial äußere Durchmesser Dₐ des Verstemmstempels sich bis zu einem radial äußeren Rand des Verstemmvolumens erstreckt.

### Zeichnung

Ein Ausführungsbeispiel der Erfindung ist in der Zeichnung dargestellt und in der nachfolgenden Beschreibung näher erläutert. In der Zeichnung zeigt :
- Fig.1: eine Querschnittsdarstellung einer bevorzugten Ausführungsform eines Verstemmstempels gemäß der Erfindung in einer Anfangsphase des Verstemmvorgangs;
- Fig.2: den Verstemmstempel von Fig.1 in einer Endphase des Verstemmvorgangs;
- Fig.3: die Einzelheit X von Fig.2 in vergrößerter Darstellung;
- Fig.4: eine Querschnittsdarstellung eines gegenüber einer Achse der Aufnahmebohrung exzentrisch versetzten Verstemmstempels in einer Anfangsphase des Verstemmvorgangs;
- Fig.5: die Einzelheit Y von Fig.4 in vergrößerter Darstellung;
- Fig.6: die Einzelheit Y in einer Endphase des Verstemmvorgangs;

### Beschreibung des Ausführungsbeispiels

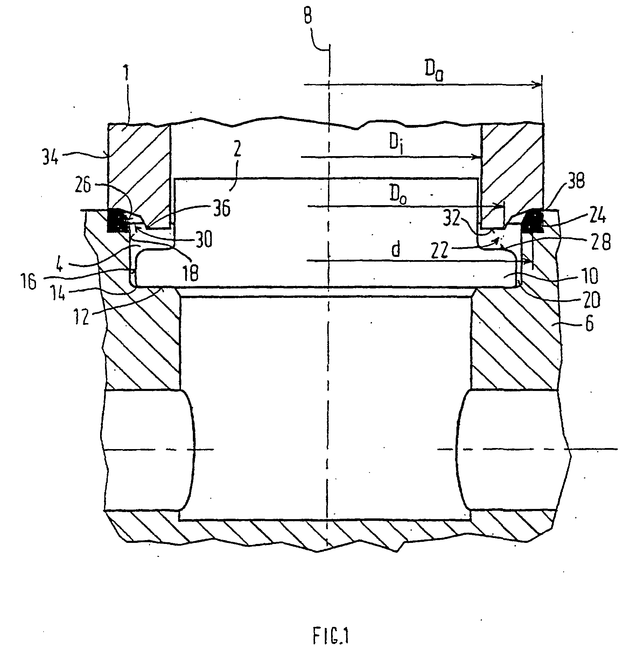

Von einem Verstemmstempel 1 ist in der Querschnittsdarstellung von Fig.1 aus Maßstabsgründen nur ein stimseitiger, mit einem Werkstück in Eingriff kommender Bereich gezeigt. Der Verstemmstempel 1 dient in bevorzugter Ausführungsform zum Verstemmen einer Buchse 2 in einer, gestuften Aufnahmebohrung 4 eines Ventilblocks 6 einer schlupfgeregelten Fahrzeugbremsanlage. Der Verstemmstempel 1 ist beispielsweise hülsenförmig ausgebildet und koaxial mit einer Achse 8 der Aufnahmebohrung 4. Die Buchse 2 ist mit einem Befestigungsflansch 10 versehen, der mit einem radial äußeren Teil seiner rechtwinkelig zur Achse 8 der Aufnahmebohrung 4 verlaufenden, vom Verstemmstempel 1 abgewandten Stirnfläche 12 an einer Bohrungsstufe 14 anliegt. Zwischen einer radial äußeren Umfangsfläche 16 des Befestigungsflansches 10 und einer radial inneren Umfangsfläche 18 der Aufnahmebohrung 4 ist vor dem Verstemmen ein schmaler, ein geringes Fügespiel erlaubender Ringspalt 20 vorhanden.

Fig.1 zeigt die Situation unmittelbar vor dem Verstemmen, wenn eine Stimfläche 22 des in Richtung der Achse 8 der Aufnahmebohrung 4 unter Axialdruck verfahrbaren Verstemmstempels 1 in Eingriff mit einem durch Schwärzung hervorgehobenen Bohrungsrand 24 der Aufnahmebohrung 4 kommt. Der Bohrungsrand 24 ist beispielsweise mit einer Fase 26 versehen und bildet das Verstemmvolumen, d.h. den Bereich, welcher durch den Axialdruck des Verstemmstempels 1 nach radial innen verdrängt wird und nach Beendigung des Verstemmvorgangs als Verstemmwulst die andere, rechtwinkelig zur Achse 8 der Aufnahmebohrung 4 verlaufende Stimfläche 28 des Befestigungsflansches 10 zumindest teilweise überdecken wird.

Die Stimfläche 22 des Verstemmstempels 1 weist erfindungsgemäß eine Randausnehmung 30 auf, welche an die jeweiligen geometrischen Verhältnisse der Aufnahmebohrung 4 angepaßt ist und sich vorzugsweise von einem eine radial innere Reststimfläche 32 begrenzenden Durchmesser D₀ bis zu einer radial äußeren Umfangsfläche 34 am Außendurchmesser Dₐ des Verstemmstempels 1 erstreckt. Die Reststimfläche 32 ist beispielsweise eben, verläuft senkrecht zur Achse 8 der Aufnahmebohrung 4 und wird nach innen durch den Innendurchmesser Dᵢ des Verstemmstempels 1 begrenzt. Der die Reststirnfläche 32 begrenzende Durchmesser D₀ am radial inneren Rand 36 der Randausnehmung 30 ist kleiner als der Durchmesser d der Aufnahmebohrung 4 im Bereich des äußeren Randes der Fase 26 und der radial äußere Durchmesser Dₐ des Verstemmstempels 1 erstreckt sich im wesentlichen bis zum einem radial äußeren Rand 38 des Verstemmvolumens 24, so daß die Randausnehmung 30 dem Verstemmvolumen 24 axial gegenüberliegt und dieses in radialer Richtung gesehen vollständig und in axialer Richtung gesehen zumindest teilweise in sich aufnimmt.

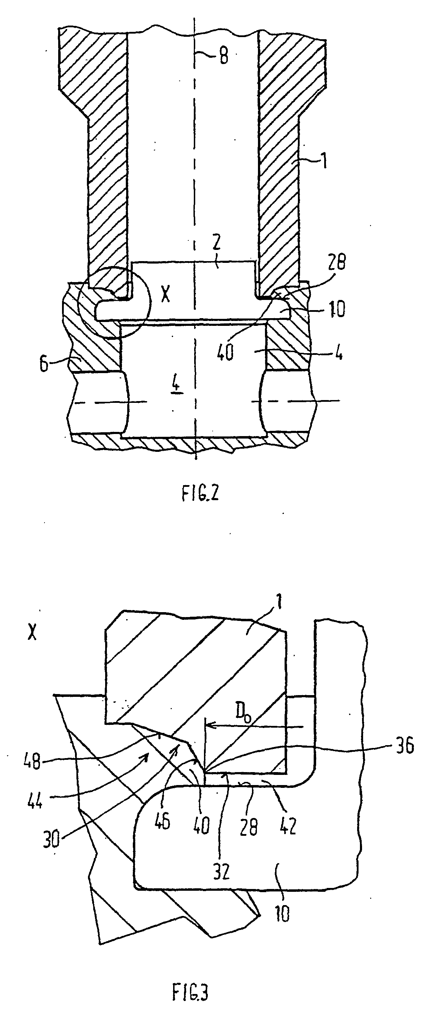

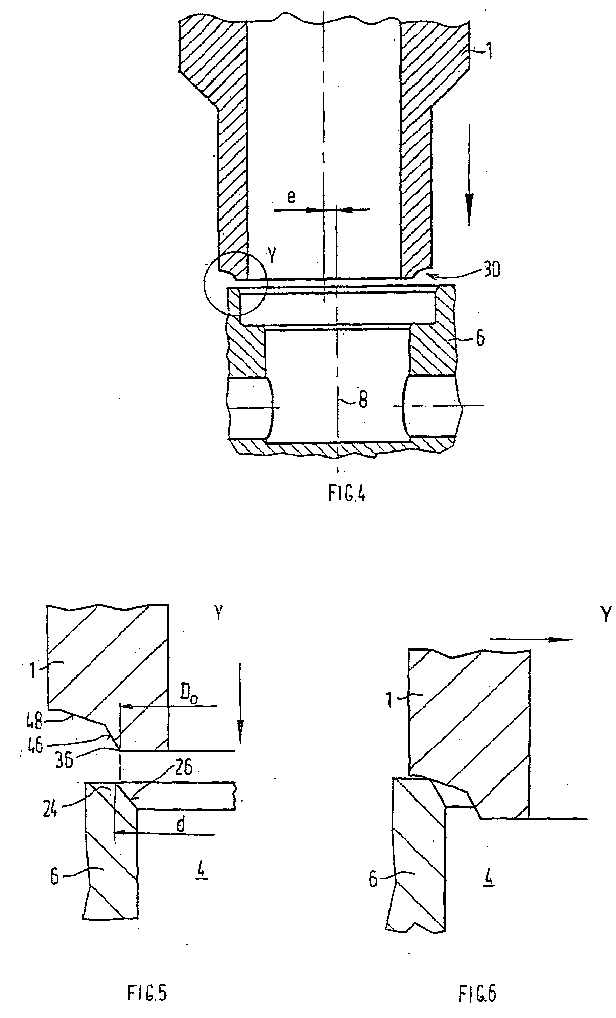

Die Situation in einer Endphase des Verstemmvorgangs ist in Fig.2 gezeigt, wo ein Teil des Verstemmvolumens 24 als Verstemmwulst 40 über die andere, rechtwinkelig zur Achse 8 der Aufnahmebohrung 4 verlaufende Stimfläche 28 des Befestigungsflansches 10 gedrängt ist und dessen Lage in der Aufnahmebohrung 4 sichert. Wie am besten anhand der in Fig.3 vergrößert dargestellten Einzelheit X von Fig.2 veranschaulicht wird, ist der Verstemmwulst 40 im wesentlichen vollständig von der Oberfläche der Randausnehmung 30 des Verstemmstempels 1 gekammert, insbesondere wird er durch den radial inneren Rand 36 der Randausnehmung 30 am Durchmesser D₀ begrenzt, so daß er nicht nach radial innen abfließen kann. Ein zwischen der Stirnfläche 28 des Befestigungsflansches 10 und der Reststirnfläche 32 des Verstemmstempels 1 verbleibender Restspalt 42 ist zu schmal, als daß der Verstemmwulst 40 in ihn hineinfließen könnte. Der vor dem Verstemmvorgang zwischen der radial äußeren Umfangsfläche 16 des Befestigungsflansches 10 und der radial inneren Umfangsfläche 18 der Aufnahmebohrung 4 vorhandene Ringspalt 20 (siehe Fig.1) ist nach dem Verstemmen vollständig mit dem verbleibenden Teil des Verstemmvolumens 24 verfüllt, so daß die Buchse 2 die Aufnahmebohrung 4 gegenüber der Umgebung fluid- und druckdicht abdichtet.

Wie ebenfalls am besten Fig.3 zeigt, erweitert sich der Querschnitt der Randausnehmung 30 in axialer, vom Bauteil weg weisender Richtung allmählich, vorzugsweise in stufenförmig konischer Weise. Ausgehend vom radial inneren Rand 36 der Randausnehmung 30 wird deren Kontur beispielsweise durch drei ebene Flächen 44 gebildet, welche sich ausgehend vom Durchmesser D₀ in größer werdender Abschrägung oder in größer werdendem Winkel in Bezug auf die Achse 8 der Aufnahmebohrung 4 aneinander anschließen.

Die Wirkung des sich erweiternden Querschnittsprofils der Randausnehmung 30 ist in Fig.4 bis Fig.6 veranschaulicht, wo die Situation eines zwar parallelen, aber um eine Exzentrizität e gegenüber der Achse 8 der Aufnahmebohrung 4 beispielsweise nach links versetzten Verstemmstempels 1 gezeigt ist. Aus Gründen der Übersichtlichkeit ist dort die zu verstemmende Buchse 2 nicht dargestellt. Wie die vergrößerte Einzelheit Y von Fig.5 zeigt, wird angenommen, daß der durch den Durchmesser D₀ gekennzeichnete innere Rand 36 der Randausnehmung 30 trotz der Exzentrizität e noch innerhalb eines gedachten Zylinders mit dem Durchmesser d des äußeren Randes der Fase 26 der Aufnahmebohrung 4 liegt. Wenn sich dann der Verstemmstempel 1 gemäß Fig.5 in Pfeilrichtung auf die Aufnahmebohrung 4 zu bewegt, kommt zunächst eine erste abgeschrägte Fläche 46 in einem linken Umfangsbereich der Randausnehmung 30 an der gleichsinnig abgeschrägten Fase 26 am Bohrungsrand 24 zur Anlage. Bedingt durch den abschrägten Querschnittsverlauf der Randausnehmung 30 im Bereich der ersten Fläche 46 wird der Verstemmstempel 1 während seiner axialen Bewegung zugleich um ein Stück nach rechts, in Richtung auf die zentrierte Lage gedrängt, wie durch den Pfeil in Fig.6 angedeutet ist. Dasselbe gilt, wenn anschließend eine zweite abgeschrägte Fläche 48 am Bohrungsrand 24 anliegt, so daß sich der Verstemmstempel während des Verstemmvorgangs bedingt durch den axialen Vorschub am Bohrungsrand 24 selbständig auszentrieren kann. Infolgedessen wird der abschließend gebildete Verstemmwulst 40 in Umfangsrichtung gleichmäßig stark ausgebildet. Anstatt stufenförmig könnte der Querschnitt der Randausnehmung 30 auf jegliche denkbare Weise erweitert sein, beispielsweise stufenlos kegelförmig oder auch in abgerundeter Weise.

## Patentansprüche

1. Verstemmstempel (1) zum Verstemmen eines Bauteils in einer Aufnahmebohrung (4), insbesondere zum Verstemmen eines Befestigungsffansches (10) in einer gestuften Aufnahmebohrung (4) eines Ventilblocks (6) einer schlupfgeregelten Fahrzeugbremsanlage, mit einer zum Bauteil weisenden, zumindest teilweise mit einem an einem Bohrungsrand der Aufnahmebohrung (4) angeordneten Verstemmvolumen (24) in Eingriff bringbaren Stimfläche (22), um zumindest einen Teil des Verstemmvolumens (24) als Verstemmwulst (40) vom Bohrungsrand her gegen eine Fläche (28) des Bauteils (10) zu drängen, **dadurch gekennzeichnet, daß** die Stimfläche (22) des Verstemmstempels (1) eine sich ausgehend von einem eine radial innere Reststirnfläche (32) begrenzenden Durchmesser (D₀) bis zu einer radial äußeren Umfangsfläche (34) des Verstemmstempels (1) erstreckende Randausnehmung (30) aufweist, welche zur zumindest teilweisen Aufnahme des Verstemmwulstes (40) vorgesehen ist.

2. Verstemmstempel nach Anspruch 1, **dadurch gekennzeichnet, daß** sich der Querschnitt der Randausnehmung (30) in axialer, vom Bauteil weg weisender Richtung allmählich erweitert, vorzugsweise in stufenförmig konischer Weise.

3. Verstemmstempel nach Anspruch 2, **dadurch gekennzeichnet, daß** die Kontur der Randausnehmung (30) vorzugsweise durch drei ebene Flächen (44) gebildet wird, welche sich ausgehend vom Durchmesser (D₀) in größer werdender Abschrägung in Bezug auf eine Achse (8) der Aufnahmebohrung (4) aneinander anschließen.

4. Verstemmstempel nach Anspruch 3, **dadurch gekennzeichnet, daß** die Reststimfläche (32) als ebene, senkrecht zur Achse (8) der Aufnahmebohrung (4) verlaufende, ringförmige Fläche ausgebildet ist, welche nach radial außen durch den radial inneren Rand (36) der Randausnehmung (30) am Durchmesser (D₀) und nach radial innen durch den Innendurchmesser (Dᵢ) des Verstemmstempels (1) begrenzt wird.

5. Verstemmstempel nach Anspruch 4, **dadurch gekennzeichnet, daß** er an die Aufnahmebohrung (4) derart angepaßt ist, daß der die Reststimfläche (32) begrenzende Durchmesser (D₀) am radial inneren Rand (36) der Randausnehmung (30) kleiner ist als der Durchmesser (d) der Aufnahmebohrung (4) und sich der radial äußere Durchmesser (Dₐ) des Verstemmstempels (1) bis zu einem radial äußeren Rand des Verstemmvolumens (24) erstreckt.

6. Verwendung eines Verstemmstempels (1) nach einem der vorhergehenden Ansprüche zur Verstemmung eines Bauteils in einer Aufnahmebohrung, insbesondere eines Befestigungsflansches (10) in einer gestuften Aufnahmebohrung (4) eines Ventilblocks (6) einer schlupfgeregelten Fahrzeugbremsanlage.

## Claims

1. Caulking punch (1) for caulking a component in a locating hole (4), in particular for caulking a fastening flange (10) in a stepped locating hole (4) of a valve block (6) of a traction-controlled vehicle brake system, having an end face (22) which points towards the component and can be brought at least partly into engagement with a caulking volume (24), arranged at a hole margin of the locating hole (4), in order to thrust at least part of the caulking volume (24), as caulking bead (40), from the hole margin against a surface (28) of the component (10), **characterized in that** the end face (22) of the caulking punch (1) has a marginal recess (30) which, starting from a diameter (Do) defining a radially inner residual end face (32), extends up to a radially outer circumferential surface (34) of the caulking punch (1) and which is intended for at least partly accommodating the caulking bead (40).

2. Caulking punch according to Claim 1, **characterized in that** the cross section of the marginal recess (30) extends gradually, preferably in a stepped conical manner, in the axial direction pointing away from the component.

3. Caulking punch according to Claim 2, **characterized in that** the contour of the marginal recess (30) is preferably formed by three plane surfaces (44) which, starting from the diameter (Do), adjoin one another with increasing slope with respect to an axis (8) of the locating hole (4).

4. Caulking punch according to Claim 3, **characterized in that** the residual end face (32) is designed as a plane, annular surface which runs perpendicularly to the axis (8) of the locating hole (4) and which is defined radially on the outside by the radially inner margin (36) of the marginal recess (30) at the diameter (D₀) and radially on the inside by the inside diameter (Dᵢ) of the caulking punch (1).

5. Caulking punch according to Claim 4, **characterized in that** it is adapted to the locating hole (4) in such a way that the diameter (D₀), defining the residual end face (32), at the radially inner margin (36) of the marginal recess (30) is smaller than the diameter (d) of the locating hole (4), and the radially outer diameter (Dₐ) of the caulking punch (1) extends up to a radially outer margin of the caulking volume (24).

6. Use of a caulking punch (1) according to one of the preceding claims for caulking a component in a locating hole, in particular a fastening flange (10) in a stepped locating hole (4) of a valve block (6) of a traction-controlled vehile brake system.

## Revendications

1. Poinçon de matage (1) pour mater un composant dans un perçage de réception (4), en particulier pour mater une bride de fixation (10) dans un perçage de réception (4) étagé d'un bloc de soupape (6) dans une installation de freinage de véhicule à régulation anti-patinage, comportant une surface frontale (22) orientée vers le composant et qu'on peut amener au moins en partie en prise avec un volume de matage (24) disposé sur un bord du perçage de réception (4) afin qu'au moins une partie du volume de matage (24) sous forme de bourrelet de matage (40) soit repoussée du bord de perçage vers une surface (28) du composant (10),
**caractérisé en ce que**
la surface frontale (22) du poinçon de matage (1) présente une cavité de bord (30) qui s'étend à partir d'un diamètre (Do) qui délimite une surface frontale restante (32) intérieure radiale jusqu'à une surface périphérique (34) extérieure radiale du poinçon de matage (1), cette cavité de bord étant prévue pour recevoir au moins en partie le bourrelet de matage (40).

2. Poinçon de matage selon la revendication 1,
**caractérisé en ce que**
la section transversale de la cavité de bord (30) s'élargit graduellement en direction axiale en s'éloignant du composant, de préférence en cône étagé.

3. Poinçon de matage selon la revendication 2,
**caractérisé en ce que**
le contour de la cavité de bord (30) est de préférence formé par trois surfaces (44) planes qui à partir du diamètre (Do) se raccordent l'une à l'autre en un biseau qui s'agrandit par rapport à un axe (8) du perçage de réception (4).

4. Poinçon de matage selon la revendication 3,
**caractérisé en ce que**
la surface frontale restante (32) prend la forme d'une surface annulaire plane qui s'étend perpendiculairement à l'axe (8) du perçage de réception (4) et qui est délimitée radialement vers l'extérieur par le bord (36) intérieur radial de la cavité de bord (30) sur le diamètre (Do) et radialement vers l'intérieur par le diamètre intérieur (Dᵢ) du poinçon de matage (1).

5. Poinçon de matage selon la revendication 4,
**caractérisé en ce qu'**
il est ajusté au perçage de réception (4) de telle manière que le diamètre (Do) qui délimite la surface frontale restante (32) sur le bord intérieur (36) radial de la cavité de bord (30) est plus petit que le diamètre (d) du perçage de réception (4) et le diamètre extérieur (Dₐ) radial du poinçon de matage (1) s'étend jusqu'à un bord extérieur radial du volume de matage (24).

6. Utilisation d'un poinçon de matage (1) selon l'une des revendications précédentes, pour mater un composant dans un perçage de réception, en particulier une bride de fixation (10) dans un perçage de réception (4) étagé d'un bloc de soupape (6) dans une installation de freinage de véhicule à régulation anti-patinage.
